# EUROPEAN PATENT APPLICATION

(11) **EP 1 862 437 A1**
(43) Date of publication of application: **05.12.2007**
(21) Application number: 07109096.3
(22) Date of filing: 29.05.2007
(51) Int. Cl.: C03C 17/25, C08J 7/04, G02B 5/20, C09D 183/02

(54) **Transparent article with infrared shielding film**

(30) Priority: 30.05.2006 JP 2006149791
(71) Applicant: Nippon Sheet Glass Company Limited, Tokyo 108-6321 (JP)
(72) Inventor: Inoguchi, Kazuyuki, TOKYO 108-6321 (JP); Kamitani, Kazutaka, TOKYO 108-6321 (JP)
(74) Representative: Hart Davis, Jason

(57) **Abstract**

A transparent article with a silica-based infrared shielding film is provided. The film has excellent abrasion resistance and advanced infrared absorbency. The film contains an organic material and an inorganic material and is formed on a surface of the transparent substrate. The film contains silica as the main component and does not separate from the transparent substrate after the Taber abrasion test prescribed in Japanese Industrial Standards (JIS) R 3212 that is carried out with respect to a surface of the film. The film further contains a manganese compound and at least one selected from indium tin oxide and antimony tin oxide. The manganese compound preferably includes manganese oxide.

## Description

The present invention relates to a transparent article with an infrared shielding film. Particularly, the present invention relates to a transparent article with an infrared shielding film having excellent abrasion resistance and infrared absorbency.

Generally, glass materials are hard and also can be used in the form of films that coat substrates. However, when employing a melting method, a high temperature treatment is necessary for obtaining a vitreous film (silica-based film). This limits the materials of which the substrates and films can be made.

The sol-gel process is a process of obtaining an oxide in a solid state by: using a solution of an organic or inorganic compound of metal as a starting material; rendering the solution into a sol in which fine particles of metal oxides or hydroxides have dissolved, through the hydrolysis reaction and polycondensation reaction of the compound contained in the solution; further gelling and solidifying the sol; and heating this gel if necessary.

The sol-gel process is expected as the method to provide a silica-based film containing an inorganic compound without deterioration by heating or an organic compound, since the process allows the film to be produced at lower temperatures. Examples of the inorganic compounds that may deteriorate during heating include an infrared cut-off component such as indium tin oxide (ITO) and antimony tin oxide (ATO).

The silica-based films formed by a sol-gel process have lower mechanical strength, particularly abrasion resistance, than that of vitreous films obtained by a melting method. Recently, we improved a sol-gel process, and then proposed a silica-based film having infrared absorbency and excellent abrasion resistance in WO 2005/095298 A1.

Conventional silica-based films disclosed in WO 2005/095298 Al can have excellent abrasion resistance comparable to that of a glass sheet obtained by a melting method. However, there is still room for improvement in infrared absorbency.

The present invention is intended to provide a silica-based film having advanced infrared absorbency and excellent abrasion resistance.

In the present invention, infrared absorbency in a silica-based film may be elevated further by including a manganese compound with at least one selected from indium tin oxide and antimony tin oxide.

The present invention provides a transparent article with an infrared shielding film, the transparent article comprising a transparent substrate and an infrared shielding film formed on a surface of the transparent substrate, wherein the infrared shielding film is an organic-inorganic composite film that contains an organic material and an inorganic material, the organic-inorganic composite film contains silica as the main component, the organic-inorganic composite film does not separate from the transparent substrate after the Taber abrasion test prescribed in Japanese Industrial Standards R 3212 that is carried out with respect to a surface of the organic-inorganic composite film, and the organic-inorganic composite film further contains a manganese compound and at least one selected from indium tin oxide and antimony tin oxide.

In this description, the term "main component" denotes a component whose content is the highest. The Taber abrasion test according to JIS R 3212 can be carried out using a commercially available Taber abrasion tester. This test is an abrasion test that is carried out at a rotation number of 1000, with a load of 500 g being applied, as prescribed in the JIS.

According to the present invention, an organic-inorganic composite film that has excellent abrasion resistance and advanced infrared absorbency can be formed. This abrasion resistance is comparable to that of a glass sheet obtained by the melting method.

The transparent article of the present invention may be prepared by the following process, for example. The process can produce a transparent article that includes a transparent substrate and an infrared shielding film formed on a surface of the transparent substrate. The infrared shielding film is an organic-inorganic composite film that contains an organic material and an inorganic material. The organic-inorganic composite film contains silica as the main component. The organic-inorganic composite film further contains a manganese compound and at least one selected from indium tin oxide and antimony tin oxide. The organic material contains a hydrophilic organic polymer. The process includes a step of applying a film-forming solution for forming the organic-inorganic composite film to the surface of the transparent substrate, and a step of removing at least a part of a fluid component contained in the film-forming solution from the film-forming solution that has been applied to the transparent substrate. The film-forming solution contains silicon alkoxide, strong acid, water, an organic solvent, a manganese compound and at least one selected from indium tin oxide and antimony tin oxide. The film-forming solution further contains a hydrophilic organic polymer as at least a part of the strong acid or as a component other than the strong acid. The silicon alkoxide has a concentration exceeding 3 mass% in terms of a SiO₂ concentration when silicon atoms contained in the silicon alkoxide are expressed as SiO₂. The strong acid has a concentration in a range of 0.0001 mol/kg to 0.2 mol/kg in terms of the molality of protons that is obtained, assuming that the protons have dissociated completely from the strong acid. The number of moles of the water is at least four times the total number of moles of the silicon atoms contained in the silicon alkoxide. The film-forming solution is applied to the transparent substrate, with an atmosphere maintained at a relative humidity lower than 40% in the step of applying. At least a part of the fluid component contained in the film-forming solution that has been applied to the transparent substrate is removed, with the transparent substrate maintained at a temperature of 400°C or lower in the step of removing.

According to the above mentioned process, a film that has a thickness exceeding 250 nm, for example, and that also has excellent abrasion resistance and advanced infrared absorbency can be formed by single application of the film-forming solution.

First, the sol-gel process is described below.

In the case of the sol-gel process using silicon alkoxide as a starting material, the silicon alkoxide in the coating solution (hereinafter referred as "film-forming solution") forms an oligomer having siloxane bonds through the hydrolysis reaction and polycondensation reaction in the presence of water and a catalyst in the film-forming solution. Thereby, the film-forming solution is changed into a sol state.

The film-forming solution in the sol state is applied to the substrate and then water and an organic solvent represented by alcohol volatilize from the film-forming solution that has been applied. In this drying step (removing step), the oligomer is concentrated by the polycondensation reaction preceding to have a higher molecular weight and the solution eventually loses flowability. Thus a film of a semisolid gel is formed on the substrate. Immediately after gelation, gaps that are present in the network of the siloxane bonds are in a state of being filled with the organic solvent and water. When water and the solvent volatilize from the gel, the siloxane polymer contracts and thereby the film is cured.

In the case of a gel obtained by the conventional sol-gel process, gaps that have remained after the organic solvent and water are removed are not filled completely and remain as pores even after a heat treatment is carried out at a maximum temperature of around 400°C. When the pores remain, the film cannot have sufficiently high mechanical strength. Hence, conventionally, it has been considered that in order to obtain a sufficiently hard film, a heat treatment has to be carried out at a higher temperature, for example, 500°C or higher.

The relationship between the reaction and the temperature in the heat treatment of a silica-based film that is formed by the sol-gel process is described further in detail. When the heat treatment is carried out at around 100°C to 150°C, the solvent and water in the film-forming solution evaporate. In the case where the heat treatment is carried out at around 250°C to 400°C, when an organic material is contained in the raw material, the organic material decomposes and evaporates. When the heat treatment is carried out at a temperature exceeding 400°C, usually no organic materials remain in the film. Furthermore, when the heat treatment is carried out at a temperature of approximately 500°C or higher, the gel skeleton contracts and thereby the film becomes dense.

As described above, in the case of a gel obtained by the conventional sol-gel process, immediately after gelation, gaps that are present in the network of the siloxane bonds are filled with the organic solvent and water. It is known that the size of the gaps depends on the form of polymerization of silicon alkoxide in the solution.

The form of polymerization varies depending on the pH of the solution. In an acidic solution, the oligomer of silicon alkoxide tends to grow linearly. When such a solution is applied to the substrate, the linear oligomer is folded and thereby forms a network structure. The film obtained thereby is a dense film having relatively smaller gaps. However, since the film is solidified with the linear polymer being folded, the microstructure is not strong. Therefore, the film tends to crack when the solvent and water volatilize from the gaps.

On the other hand, in an alkaline solution, spherical oligomers tend to grow. When such a solution is applied to the substrate, a structure in which spherical oligomers are joined to each other is formed. Accordingly, the film obtained thereby has relatively large gaps. Since these gaps are formed through bonding and growth of the spherical oligomers, the film tends not to crack when the solvent and water volatilize from the gaps.

In the present invention, even when the film is thick, a crack-free dense film can be formed under certain conditions when the concentration of strong acid, water content, etc. are adjusted appropriately in the acidic region that allows a relatively dense film to be formed.

It is known that silanol has an isoelectric point of 2. This denotes that silanol can exist most stably in the film-forming solution when the solution has a pH of 2. That is, even if a large amount of hydrolyzed silicon alkoxide exists in the solution, the probability that oligomers are formed through the dehydration condensation reaction is very low when the solution has a pH of about 2. Consequently, hydrolyzed silicon alkoxide can exist in the form of monomers or in a lower degree of polymerization in the film-forming solution.

In the range where the pH is around 2, one alkoxyl group per molecule is hydrolyzed in silicon alkoxide and thereby the silicon alkoxide becomes silanol and is stabilized in this state. For example, in the case of tetraalkoxysilane that has four alkoxyl groups, one of the alkoxyl groups is hydrolyzed and thereby it becomes silanol and is stabilized in this state.

The film-forming solution will have a pH of around 3 to 1 when a strong acid is added to the sol-gel solution so that the mass molality of protons (hereinafter also referred to simply as "proton concentration") that is obtained, assuming that the protons have dissociated completely from the strong acid, is approximately 0.001 mol/kg to 0.2 mol/kg, preferably approximately 0.001 mol/kg to 0.1 mol/kg. When the pH is adjusted in this range, silicon alkoxide can exist in the film-forming solution stably as monomeric or lower polymerized silanol.

The film-forming solution of the present invention contains a mixed solvent of water and an organic solvent, but another solvent can be added thereto if necessary. Similarly in the case of using such a mixed solvent, a solution having a pH of around 2 can be obtained by using a strong acid and adding it so that the mass molality of protons that is obtained, assuming that the protons have dissociated completely from the strong acid, is in the above mentioned range.

For the calculation of the mass molality of protons, protons of the acid to be used whose acid dissociation constant in water is 4 or higher do not need to be taken into account. For instance, since the acid dissociation constant of acetic acid, which is a weak acid, in water is 4.8, the protons of the acetic acid are not included in the proton concentration even when acetic acid is contained in the film-forming solution.

Furthermore, for example, phosphoric acid has three dissociation stages and three protons per molecule can be dissociated. The dissociation constant at the first stage is 2.15, which allows the phosphoric acid to be considered as a strong acid. However, the dissociation constant at the second stage is 7.2 and that at the third stage is further higher. Hence, the proton concentration that is determined, assuming that the protons have dissociated from the strong acid, can be calculated on the assumption that only one proton dissociates from one molecule of the phosphoric acid. The phosphoric acid from which one proton has dissociated is no longer a strong acid. Accordingly, the dissociation of protons at and after the second stage does not need to be taken into account. In this description, the strong acid denotes, specifically, an acid having protons whose acid dissociation constant in water is lower than 4.

The reason why the proton concentration is defined as a concentration that is determined when the protons have dissociated completely from the strong acid is as follows. That is because in a mixed solution of water and an organic solvent, it is difficult to determine the degree of dissociation of a strong acid accurately.

When the film-forming solution is applied to the substrate surface while being maintained at a pH of around 1 to 3 and then is dried, the film is filled densely with silicon alkoxide that is in a lower polymerized state. Accordingly, a considerably dense film with finer pores can be obtained.

Although this film is dense, the hardness thereof does not become higher than a certain degree due to insufficient hydrolysis even when it is heated at 200°C to 300°C. Hence, excess water is added to silicon alkoxide so that the hydrolysis of silicon alkoxide is facilitated not only before the application of the film-forming solution but also after the application. In the state where hydrolysis progresses readily, the film is cured even if it is not heated to a high temperature. Specifically, water having a maximum number of moles that is required for hydrolysis, i.e. a number of moles that is at least four times the total number of moles of silicon atoms in silicon alkoxide, is added. Maximum number of moles of water may be, for example, 20 times the total number of moles of the silicon atoms.

When the film-forming solution is dried (removing step), water evaporates in parallel with the volatilization of the solvent. When this is taken into consideration, it is further preferable that the number of moles of water be more than four times, for example, 5 times to 20 times the total number of moles of the silicon atoms.

In silicon alkoxide, a maximum of four alkoxyl groups can bind to one silicon atom. Alkoxide that has a small number of alkoxyl groups requires a smaller number of moles of water for hydrolysis. Furthermore, even in the case of tetraalkoxysilane in which four alkoxyl groups have bound to a silicon atom, the total number of moles of water required for hydrolysis of a polymerized material thereof (that is commercially available as, for instance, "Ethyl silicate 40" manufactured by COLCOAT Co., Ltd.) is less than four times that of the silicon atoms (the number of moles of water required for hydrolysis stoichiometrically is *(*2*n* + 2) moles where n denotes the number of moles of Si contained in the polymerized material (n ≥2)). The higher the polymerization degree of the alkoxysilane material to be used, the smaller the number of moles of water required for hydrolysis. Hence, practically, the number of moles of water required for the hydrolysis of silicon alkoxide may be less than four times the total number of moles of silicon atoms in the silicon alkoxide. However, in view of the fact that the addition of excess water is preferred, it is advantageous that water is added to the film-forming solution in a number of moles at least four times, preferably more than four times, further preferably at least five times, the total number of moles of silicon atoms.

Addition of water whose number of moles exceeds that required for stoichiometric hydrolysis accelerates the hydrolysis reaction and polycondensation reaction of silicon alkoxide in the drying step. This is because water evaporation in the drying step induces a large capillary shrinkage and facilitates a diffusion and concentration of silicon alkoxide. The variation of the pH of the applied solution from the above-mentioned range due to volatilization of the solvent and vaporization of water also is one of the factors that accelerate hydrolysis. By forming a dense film and allowing the hydrolysis and polycondensation reaction to progress sufficiently as described above, a hard film is formed. As a result, a film having excellent abrasion resistance can be obtained through a heat treatment that is carried out at a lower temperature.

The use of this method makes it possible to obtain a silica-based film that has excellent abrasion resistance although it is thick. A thick film can be obtained by preparing the film-forming solution so that the concentration of silicon alkoxide is relatively high, for example, the silicon atoms contained in the silicon alkoxide exceeds 3 mass% in terms of the SiO₂ concentration when the silicon atoms are expressed as SiO₂ The concentration of the silicon alkoxide is desirably in a range from more than 3 mass% but at most 30 mass%, preferably more than 3 mass% but less than 13 mass%, further preferably more than 3 mass% but at most 9 mass%. When the concentration of the silicon alkoxide is excessively high in the film-forming solution, cracks may occur that can cause the film to separate from the transparent substrate.

Examples of silicon alkoxide include tetraethoxysilane, ethyl silicate (SiₙOₙ₋₁ (OC₂H₅)2ₙ₊₂) (for instance. Ethyl silicate 40 and Ethyl silicate 48 manufactured by COLCOAT CO., LTD) that can made by polymerization of tetraethoxysilane, tetramethoxysilane, methyl silicate (SiₙOₙ₋₁(OCH₃)₂ₙ₊₂) that can made by polymerization of tetramethoxysilane.

Methoxysilane preferably is used when faster reactivity is required, and ethoxysilane preferably is used when slower reactivity is required. Ethoxysilane tends to block attacks toward the Si-O bond by water in comparison with methoxysilane due to the fact that the molecular size of ethoxy group is larger than that of methoxy group. A polymeric silicon alkoxide, such as ethyl silicate and methyl silicate, further tends to block the attack and exhibits longer reaction time in comparison with a monomeric silicon alkoxide. This is because the polymeric silicon alkoxide contains more alkoxyl groups per molecule and thereby has higher hydrophobicity. The polymeric silicon alkoxide should be used with the monomeric silicon alkoxide. In this case, the reaction time becomes further controllable, and also it becomes easier to apply the film-forming solution onto the transparent substrate. This is because the monomeric silicon alkoxide quickly hydrolyzes and then becomes hydrophilic. Tetraethoxysilane and a material made by polymerization of tetraethoxysilane are preferable examples of silicon alkoxide, for decreasing adverse effects of the film-forming solution on a human body and making the hydrolysis reactivity of silicon alkoxide further controllable. A silicon alkoxide containing butoxy groups, which is obtained by substitution of a part of methoxy groups or ethoxy groups, may be used for facilitating the reactivity, specifically a polarity, of silicon alkoxide.

Silicon alkoxide or a material made by polymerization of silicon alkoxide may be a material containing hydrolysate of alkoxyl groups. As described later, the use of this method makes it possible to obtain an organic-inorganic composite film that has excellent abrasion resistance and is free from cracks, while having a thickness exceeding 250 nm, and even without using a group of silicon alkoxide such as trifunctional silane (R'Si(OR)₃), etc., other than tetrafunctional silane.

Hydrolysis of silicon alkoxide should be carried out at the temperature higher than the freezing point of water. It preferably is carried out at the temperature in a range of 5°C to 50°C. It further preferably is carried out at the temperature in a range of 15°C to 40°C. Kinetic energies of molecules and particles are decreased at these lower temperatures, and thereby a trend that molecules or particles tend to gather (cohesion among the molecules or particles) is accelerated. Silica tends to cohere at the temperature not higher than the freezing point of water, and thereby the hydrolysis reaction of silica tends not proceed. Since the rising temperature increases the kinetic energy of the particles, each particle comes apart progressively and disperses sufficiently when raising the temperature for a hydrolysis reaction. Collision among the particles facilitates the increase of the kinetic energy. When the particles have weak bonds, excess rise of the temperature may generate aggregates of the particles and make the hydrolysis reaction uncontrollable. The weak bonds cleave easily and thereby the particles tend to destabilize.

It is advantageous that a hydrophilic organic polymer is added to the film-forming solution. The hydrophilic organic polymer prevents the occurrence of cracks that may accompany the evaporation of fluid components in the film-forming solution. The hydrophilic organic polymer lies between silica particles produced in the solution and thereby relaxes the effect of film shrinkage that accompanies the evaporation of fluid components. The addition of the hydrophilic organic polymer may prevent the occurrence of excess curing and shrinkage of the film during its forming process, and thereby the stress in the film is relaxed. The hydrophilic organic polymer serves to maintain the abrasion resistance of the film by preventing the film from shrinking.

In a film forming process, since the film can be heated at a lower temperature than that employed conventionally, the hydrophilic organic polymer remains in the film even after heating. Hence, the addition of the hydrophilic organic polymer makes it possible to obtain a film that has excellent abrasion resistance even when the film has a further increased thickness. Consequently, the organic-inorganic composite film may contain a hydrophilic organic polymer as an organic material.

It is advantageous that the hydrophilic organic polymer is added to the film-forming solution beforehand. In an organic-inorganic composite film formed of the film-forming solution, it is conceivable that an organic material and an inorganic material have been compounded on the molecular level. Generally, the hydrophilic organic polymer is added as a component other than the strong acid. However, a polymer that serves as a strong acid, for instance, a polymer containing a phosphoester group may be added as at least a part of the strong acid.

With reference to various experimental results, the hydrophilic organic polymer seems to prevent the film from becoming porous by preventing the growth of silica particles that are formed through the sol-gel reaction.

Examples of the hydrophilic organic polymers include polymers that include polyoxyalkylene groups (polyalkylene oxide structures) such as polyethylene glycol, polypropylene glycol and a polymer containing polyether groups. Examples of the hydrophilic organic polymers include polyvinylpyrrolidone, polyvinylcaprolactam, etc. One or more types of the hydrophilic organic polymer may be employed.

A total concentration of the hydrophilic organic polymer is preferably at most 60 mass%, further preferably at most 40 mass%, with respect to the SiO₂ concentration when silicon atoms contained in the silicon alkoxide are expressed as SiO₂. That is because the film strength may be deteriorated when a concentration of the hydrophilic organic polymer in the film, which is cured by the heat treatment, is excessively high. On the other hand, when the concentration of the hydrophilic organic polymer is excessively low, the film stress caused by shrinkage during curing cannot be relaxed and thereby cracks may occur. Thus the total concentration of the hydrophilic organic polymer is preferably at least 0.1 mass%, particularly at least 5 mass%, with respect to the SiO₂.

In the organic-inorganic composite film of the present invention, it is preferable that the content of the organic material be 0.1% to 60%, particularly 2% to 60%, with respect to the total mass of the organic-inorganic composite film.

The organic-inorganic composite film of the present invention contains a manganese compound and at least one selected from indium tin oxide (ITO) and antimony tin oxide (ATO). The organic-inorganic composite film exhibits advanced infrared absorbency, for instance, a transmittance of at most 15% at a wavelength of 1550 nm. The addition of the manganese compound reduces the amounts of ITO and/or ATO in the film, where the amount is needed to achieve a predetermined infrared absorbency. The organic-inorganic composite film preferably includes manganese oxide as a manganese compound.

The manganese compound may be present in the film as an inorganic material such as manganese oxide, manganese chloride and manganese sulfate. The manganese compound may be present in the film as a composite of ITO and/or ATO and a manganese compound, or as an organic material such as manganese acetate and tris (2, 4-pentanedionato) manganese (III).

Although the reason for the improvement in infrared absorbency of the organic-inorganic composite film is not yet clearly defined, a possible explanation is as follows. There are three possibilities. First, manganese may work as a dopant for indium oxide and tin oxide, and releases electrons. The increase in the free electrons of ITO and ATO causes a shift of the edge of the absorption band to shorter wavelengths. Second, manganese oxide, which is a semi-conducting material, may change the conductive state of ITO and ATO. Third, the manganese compound added into the solution may work as a reducer preventing ITO and ATO from oxidation and deterioration.

With the improvement of the sol-gel process described above, the present invention provides an article with an organic-inorganic composite film formed on a transparent substrate. The organic-inorganic composite film has excellent abrasion resistance, since the film does not separate from the transparent substrate even after having been subjected to the Taber abrasion test prescribed in JIS R 3212, and has also excellent infrared absorbency.

The Taber abrasion test according to JIS R 3212 can be carried out using a commercially available Taber abrasion tester. This test is an abrasion test that is carried out at a rotation number of 1000, with a load of 500 g being applied, as prescribed in the JIS.

The thickness of the organic-inorganic composite film is more than 250 nm but at most 5 µm, preferably more than 300 nm but at most 5 µm, further preferably 500 nm to 5 µm, and particularly preferably 1 µm to 5 µm. The thickness of the organic-inorganic composite film may be at most 4 µm.

The present invention also allows a portion that has been subjected to the Taber abrasion test to have a haze ratio of 4% or lower after the Taber abrasion test. This abrasion resistance is comparable to that of a silica-based film obtained by the melting method.

The film-forming solution contains silicon alkoxide, strong acid, water, an organic solvent, a manganese compound and at least one selected from indium tin oxide and antimony tin oxide. Examples of preferred manganese compounds include a compound that is soluble in the film-forming solution such as manganese chloride, manganese acetate, manganese sulfate, tris (2, 4-pentanedionato) manganese (III), etc. As described above, it is advantageous that the film-forming solution further contains the hydrophilic organic polymer. The hydrophilic organic polymer can behave as a dispersant that prevents ITO and/or ATO from being agglutinated due to acids. Surfactants of phosphoric acid, such as phosphate ester groups and polyoxyalkylene groups, exhibit advanced dispersive ability.

Examples of the strong acid include hydrochloric acid, nitric acid, trichloroacetic acid, trifluoroacetic acid, sulfuric acid, phosphoric acid, methanesulfonic acid, paratoluenesulfonic acid, and oxalic acid. Among strong acids, volatile acids can be used advantageously since they volatilize during heating and thus do not remain in a cured film. When acid remains in the cured film, it may deteriorate the film hardness, since the acid may hinder inorganic components from binding.

Examples of the organic solvent include an alcohol having a boiling point not higher than 100°C such as methyl alcohol, ethyl alcohol, 1-propyl alcohol, isopropyl alcohol, t-butyl alcohol, etc. Another organic solvent (polarized solvent), which has a boiling point higher than 100°C and exhibits compatibility with the above mentioned alcohol and water, can be used with the above mentioned alcohol.

A polar solvent that has a boiling point in the range of higher than 100°C but not higher than 180°C, particularly higher than 100°C but not higher than 140°C, is preferably used. Examples of the polar solvents include an alcohol and ether such as isobutyl alcohol, 1-butanol, diacetone alcohol, ethylene glycol monoethyl ether (ethyl cellosolve), ethylene glycol monomethyl ether (methyl cellosolve), ethylene glycol monobutyl ether (butyl cellosolve), 1-methoxy-2-propanol, etc. The polar solvents may include ketone.

When an organic solvent having a boiling point lower than that of water is used as a main solvent, and duration of an air-drying step that is a part of the removing step is elongated, gaps tend to be formed in the organic-inorganic composite film, since water and the solvent evaporate during the air-drying step. The heat treatment of the removing step induces film shrinkage and generates a force to narrow the gap. The force generates stresses in the film and thereby cracks tend to occur. The organic solvent having a boiling point higher than 100°C preferably is used to avoid the occurrence of the cracks. A solvent having a comparatively low boiling point such as isobutyl alcohol, 1-butanol, etc. preferably is used when the duration of the air-drying step is set shorter. On the other hand, a solvent having a comparatively high boiling point such as ethyl cellosolve, methyl cellosolve, etc. preferably is used when the duration of the air-drying step is set longer.

When an organic solvent having a boiling point higher than 180°C is used, the excellent abrasion resistance of the film may be deteriorated by the heat treatment at the lower temperature that is employed to form the organic-inorganic composite film. Although the reason for the deterioration in the abrasion resistance of the film is not yet clearly defined, a possible explanation is as follows. The solvent having a boiling point higher than 180°C tends to remain in the film after the heat treatment at the lower temperature, resulting in a generation of holes (pores), which obstructs a film densification, in the film. This is because the effects of water to the hydrolysis reaction and polycondensation reaction of silicon alkoxide are degraded by the solvent remaining in the film, and then these reactions do not proceed sufficiently. Additional heat treatment at a higher temperature, which is employed to densify the film, decomposes the hydrophilic organic polymer and induces cracks in the film. The decomposition of the polymer triggers a rapid shrinkage and structural rearrangement of the film.

It is advantageous that the film-forming solution applies to the transparent substrate while maintaining an atmosphere at a relative humidity lower than 40% in the applying step. When controlling the relative humidity lower than 40%, a silica-based film having a dense structure tends to be formed and thereby the excellent abrasion resistance can be obtained accordingly. This is because the controlling prevents the solution from uptaking excess water derived from the atmosphere. It is further advantageous that the relative humidity is controlled at 30% or lower to improve the abrasion resistance of the silica-based film. The relative humidity preferably is maintained at 15% or higher, particularly at 20% or higher, to ease a handling (applying) of the film-forming solution. When applying the film-forming solution, it is important to control the relative humidity of the atmosphere at the range described above for acquiring the excellent abrasion resistance.

In the removing step, fluid components, such as water and the organic solvent, of the film-forming solution that has been applied to the transparent substrate are removed. At least a part of (preferably, substantially all of) water and the organic solvent are removed in the removing step.

It is advantageous that the heat treatment in the removing step is carried out at 400°C or lower, preferably at 300°C or lower, particularly preferably at 250°C or lower, to prevent an organic material, such as the hydrophilic organic polymer, from decomposing. The limit of the lower temperature should be selected in response to desired film hardness. The heat treatment can be carried out at the temperature of 100°C or higher, 150°C or higher, and 180°C or higher. The infrared absorbency of ITO tends to be deteriorated by heating at a temperature higher than 250°C. The organic-inorganic composite film allows containing a material such as ITO, which has less thermo stability, without deteriorating. This is because even a heat treatment at around 200°C sufficiently cures the film. Adding the hydrophilic organic polymer to the film-forming solution helps diffuse ITO and ATO evenly in the film. Surfactants of phosphoric acid including polyether groups exhibit an advanced ability to disperse them. The film-forming solution further may include a conventional dispersant and a conventional surfactant.

The removing step preferably is carried out with an air-drying step performed at room temperature (25°C) and a heat treating step performed after the air-drying step. The heat treating step preferably is performed in an atmosphere at a temperature higher than room temperature but not higher than 400°C, for example, in a range of 100 to 400°C, or not higher than 250°C. The air-drying step preferably is performed while controlling an atmosphere at a relative humidity lower than 40%, or at not higher than 30%. Controlling the relative humidity at the above mentioned range prevents the occurrence of cracks in the film. The lower relative humidity limit in the air-drying step may be 15% or 20%, but is not restricted.

The hydrolysis reaction and polycondensation reaction of silicon alkoxide in the film-forming solution can be controlled by adjusting a pH of the film-forming solution and adding the hydrophilic organic polymer to the film-forming solution, as mentioned above. Adding the hydrophilic organic polymer to the film-forming solution eases the adjusting of the amount of water. The amount is employed to generate a sufficient driving force for film shrinkage at the air-drying step and the heat treating step, and to prevent the film from excess shrinking. Thus, a thick organic-inorganic composite film having an excellent abrasion resistance and advanced infrared absorbency with a thickness of, for example, more than 250 nm but at most 5 µm, can be formed by carrying out each of the following steps once: a step of applying the film-forming solution and a step of removing at least a part of the fluid components contained in the film-forming solution that has been applied.

The organic-inorganic composite film of the present invention has a comparable film hardness to that of molten glass although it is heat-treated at the lower temperature, as mentioned above. This organic-inorganic composite film is suitable for practical use even when it is used for window glasses for automobiles or buildings. The transparent substrate, which the organic-inorganic composite film is formed, has a thickness of more than 0.1 mm. When a film, especially a resin film, having a thickness of at most 0.1 mm is used for the transparent substrate, the abrasion resistance of the organic-inorganic composite film tends to deteriorate, since the transparent substrate itself does not have sufficient strength and thereby winds easily. A transparent substrate having a thickness of at least 0.3 mm, further at least 0.4 mm and particularly at least 0.5 mm preferably is used. A transparent substrate having a thickness of at least 2 mm or at least 3 mm may be used. The upper thickness limit may be 20 mm or 10 mm, but is not restricted.

The organic-inorganic composite film is formed on the transparent substrate. A substrate made of an inorganic material such as glass preferably is used as the transparent substrate. The glass substrate exhibits improved cohesion with the organic-inorganic composite film. Examples of transparent substrates include a substrate made of a resin such as polycarbonate, polyethylene, polypropylene, polyethylene terephthalate, polyether sulfone, polysulfone, cyclic polyolefin, polymethylpentene, nylon, etc.

### EXAMPLES

Hereinafter, the present invention is described further in detail using examples.

### Example 1

First, 2.26 g of tetraethoxysilane (manufactured by Shin-Etsu Chemical Co., Ltd.), 2.48 g of pure water, 0.01 g of concentrated hydrochloric acid (35 mass%, manufactured by KANTO CHEMICAL CO., INC.), 0.06g of isobutyl alcohol (manufactured by KANTO CHEMICAL CO., INC.), 0.09 g of a polyether phosphate surfactant (manufactured by Lubrizol Japan Ltd.; SOLSPERSE 41000), and 0.01g of polyethylene glycol 200 (manufactured by KANTO CHEMICAL CO., INC.) were added to 4.07 g of ethyl alcohol (manufactured by KATAYAMA CHEMICAL, Inc.) and stirred at 20°C for 4 hours. 0.63 g of a fine ITO particle dispersant (manufactured by Mitsubishi Materials Corporation; an ethyl alcohol solution containing 40 mass% of ITO) was further added to this solution and stirred for 1 minute. Thus a mixed solution was obtained. Manganese chloride tetrahydrate (manufactured by KANTO CHEMICAL CO., INC.) and ethanol (manufactured by KANTO CHEMICAL CO., INC.) were mixed at a ratio of 7:18 and stirred for 4 hours. Thus 10 g of a solution containing manganese chloride was obtained. Subsequently, 0.75 g of the solution containing manganese chloride was added to the mixed solution and stirred at 20°C for 30 minutes. Thus a film-forming solution was obtained. At least a part of the manganese chloride becomes manganese oxide in a postforming silica-based film, in this example.

Subsequently, the film-forming solution was applied to a soda-lime-silicate glass substrate (100 x 100 mm, 3.1-mm thick) that had been washed, at a relative humidity of 30% and at room temperature by a flow coating method. In this state, it was air-dried at room temperature for about 5 minutes. Thereafter, it was placed in an oven whose temperature had been raised to 200°C beforehand and then was heated for 18 minutes. After that, it was cooled. Thus a silica-based film was formed on the glass substrate. The silica-based film was a 1100-nm thick film that had high transparency and was free from cracks.

The infrared absorbency of the film was evaluated by using a commercially available spectrophotometer (UV3100PC, manufactured by SHIMADZU CORPORATION). The transmittance obtained at a wavelength of 1550 nm was 14.3%.

The hardness of the film was evaluated by the abrasion test according to JIS R 3212. That is, using a commercially available Taber abrasion tester (5150 ABRASER, manufactured by TABER INDUSTRIES), the film was subjected to abrasion 1000 times with a load of 500 g. The haze ratio was measured before and after the abrasion test. It was proved that the film was not separated from the transparent substrate after the Taber test. The haze ratio was as low as 2.4% after the Taber test. The difference between the haze ratios that were obtained before and after the test was very small. Thus it was proved that the film had high hardness. This glass sheet with a silica film is highly useful even when it is used for window glasses for automobiles or buildings. For the window glass for automobiles, a haze ratio is required to be 4% or lower after the Taber test.

### Comparative Example 1

In Comparative Example 1, a film-forming solution and a film was obtained by treatment in the same manner as in Example 1, except that no manganese chloride was added.

The film thus obtained was a 1100-nm thick film that had high transparency and was free from cracks. The haze ratio was as low as 0.3% after the Taber test and it had comparable hardness to that of the molten glass sheet. The infrared absorbency was poor in comparison with that of Example 1, since the transmittance obtained at a wavelength of 1550 nm was 19.7%.

### Example 2

In Example 2, a film-forming solution and a film was obtained by treatment in the same manner as in Example 1, except that the amount af ITO was decreased about 20 mass%.

First, 2.43 g of tetraethoxysilane (manufactured by Shin-Etsu Chemical Co., Ltd.), 1.66 g of pure water, 0.01 g of concentrated hydrochloric acid (35 mass%, manufactured by KANTO CHEMICAL CO., INC.), 0.07g of isobutyl alcohol (manufactured by KANTO CHEMICAL CO., INC.), 0.11 g of a polyether phosphate surfactant (manufactured by Lubrizol Japan Ltd.; SOLSPERSE 41000), and 0.01 g of polyethylene glycol 200 (manufactured by KANTO CHEMICAL CO., INC.) were added to 4.71 g of ethyl alcohol (manufactured by KATAYAMA CHEMICAL, Inc.) and stirred at 20°C for 4 hours. 0.50 g of a fine ITO particle dispersant (manufactured by Mitsubishi Materials Corporation; an ethyl alcohol solution containing 40 mass% of ITO) was further added to this solution and stirred for 1 minute. Thus a mixed solution was obtained. Manganese chloride tetrahydrate (manufactured by KANTO CHEMICAL CO., INC.) and ethanol (manufactured by KANTO CHEMICAL CO., INC.) were mixed at a ratio of 7:18 and stirred for 4 hours. Thus 10 g of a solution containing manganese chloride was obtained. Subsequently, 0.50 g of the solution containing manganese chloride was added to the mixed solution and stirred at 20°C for 30 minutes. Thus a film-forming solution was obtained. At least a part of the manganese chloride becomes manganese oxide in a postforming silica-based film in this example.

The film thus obtained was a 1000-nm thick film that had high transparency and was free from cracks. The infrared absorbency of the film was evaluated by using a commercially available spectrophotometer (UV3100PC, manufactured by SHIMADZU CORPORATION). The transmittance obtained at a wavelength of 1550 nm was 18.5%. Thus the film had advanced infrared absorbency, while the film contained ITO per unit area about 20 mass% less, in comparison with that of Comparative Example 1. The haze ratio was as low as 2.6% after the Taber test. The difference between the haze ratios that were obtained before and after the test was very small. Thus it was proved that the film had high hardness.

### Comparative Example 2

In Comparative Example 2, a film-forming solution and a film was obtained by treatment in the same manner as in Example 1, except that instead of using the solution containing manganese chloride, 0.75 g of a solution containing lanthanum chloride was used.

Lanthanum chloride, 7-hydrate (manufactured by KANTO CHEMICAL CO., INC.) and ethanol (manufactured by KANTO CHEMICAL CO., INC.) were mixed at a ratio of 17:58 and stirred for 4 hours. Thus 10 g of the solution containing manganese chloride was obtained. At least a part of lanthanum chloride becomes lanthanum oxide in a postforming silica-based film in this example.

The film obtained by using the film-forming solution was a 1100-nm thick film that had high transparency and was free from cracks. The haze ratio was as low as 3.2% after the Taber test. The infrared absorbency was not comparable to that of Example 1, while it was improved in comparison with that of Comparative Example 1, since the transmittance obtained at a wavelength of 1550 nm was 16.2%.

The reason why the infrared absorbency of the film in Example 1 was higher than that of the film in Comparative Example 2 is not yet clearly figured out. A possible explanation is as follows. Manganese oxide changes electron density profiles of ITO, while lanthanum oxide changes a refractive index in the film.

The present invention provides a transparent article with a silica-based film having excellent abrasion resistance and advanced infrared absorbency. The present invention thus has a high utility value in the technical fields where infrared absorbency is required.

## Claims

1. A transparent article with an infrared shielding film, the transparent article comprising a transparent substrate and an infrared shielding film formed on a surface of the transparent substrate,
wherein the infrared shielding film is an organic-inorganic composite film that contains an organic material and an inorganic material,
the organic-inorganic composite film contains silica as the main component,
the organic-inorganic composite film does not separate from the transparent substrate after the Taber abrasion test prescribed in Japanese Industrial Standards R 3212 that is carried out with respect to a surface of the organic-inorganic composite film, and
the organic-inorganic composite film further contains a manganese compound and at least one selected from indium tin oxide and antimony tin oxide.

2. The transparent article as claimed in claim 1, wherein the manganese compound includes manganese oxide.

3. The transparent article as claimed in claim 1 or claim 2, wherein the transparent article exhibits a transmittance of at most 15% at a wavelength of 1550 nm.

4. The transparent article as claimed in any one of claims 1 to 3, wherein the organic-inorganic composite film contains a hydrophilic organic polymer as the organic material.
